# EUROPEAN PATENT APPLICATION

(11) **EP 1 880 776 A1**
(43) Date of publication of application: **23.01.2008**
(21) Application number: 06425498.0
(22) Date of filing: 19.07.2006
(51) Int. Cl.: B21C 37/08

(54) **Method for the production of tubes**

(71) Applicant: EUROPA METALLI S.p.A., 50127 Firenze (IT)
(72) Inventor: Ammannati, Niccolo, 55052 Fornaci di Barga (IT); Angeli, Carlo, 51023 Campo Tizzoro (IT); Martellucci, Elena, 55052 Fornaci di Barga (IT)
(74) Representative: Plebani, Rinaldo

(57) **Abstract**

Described herein is a method for the production of tubes (2) for heat exchangers, including the steps of:
a) producing an ingot with rectangular cross section (plate)
b) hot-rolling said plate so as to form a blank
c) rapidly cooling said blank by spraying water inside a purposely designed cooling tunnel
d) cold-rolling said blank until a strip or skelp (3) is obtained
e) forming the tube (2) starting from the skelp to pass from the plane geometry of the skelp to the cylindrical geometry of the tube and welding the tube;

in which the ingot is formed starting from an alloy that can undergo precipitation hardening, and the tube is welded by high-frequency induction welding.

## Description

The present invention relates to a method for producing tubes for heat exchangers, in particular for applications in the sector of air conditioning and refrigeration, or more generally for applications that call for high-level thermomechanical properties.

Generally, the tubes used in the air-conditioning and refrigeration (ACR) sector are made starting from Cu-DHP (deoxidized high-residual phosphorus) alloys, without oxygen, in which to guarantee deoxidization a relatively high content of residual phosphorus, comprised usually between 0.015 and 0.04 wt%, is maintained. The presence of phosphorus enables elimination of phenomena of brittleness in a reducing environment, improvement of the cold plastic deformability, and above all increase in the suitability for undergoing brazing. Cu-DHP alloys have proven consequently particularly suited for applications of sheet-metal working, where there is a need for joins that remain mechanically stable. In the operations of brazing, in fact, frequently deoxidants are used precisely to prevent the copper surface from being coated with oxides (the formation of which is induced by heat), which prevent correct co-penetration of the weld alloy. Likewise, if the copper already contained oxygen to start with, the strength of the joint would be in any case impaired. Consequently, the copper utilized for making rolled section to be used for coverings and sheet-metal working, as well as for the production of tubes for fluid-distribution systems or plants, is of the Cu-DHP type. In particular, these alloys have found regular use with commonly used HFC cooling fluids, which have by now almost completely replaced CFCs.

The current trend of environmental policies at a worldwide level (for example, the directives of the Kyoto Protocol) has been, however, that of pushing the market towards the use of other coolants that are less harmful for the environment, above all as regards the repercussions at a global level in terms of greenhouse effect. From the operating standpoint, however, said coolants call for higher operating pressures.

The use of the typical ACR tubes in heat exchangers that operate at such high operating pressures would necessarily lead to a considerable increase in the thickness of the tube, with consequent marked increases of cost, also in the light of the constant increase in the price of the raw material over the last few years. Larger thicknesses of the pipes result moreover in a reduction in the heat-exchange coefficients, hence penalizing the efficiency of the global process of refrigeration.

This drawback remains, albeit to a lesser extent, even working the tube appropriately in order to increase the heat-exchange efficiency, for example rendering the internal surface of the tube appropriately corrugated, resorting to profiles with even complex geometries, which increase the turbulence of the fluid that flows within the tubes and consequently lead to higher heat-exchange coefficients. In particular, it is possible to obtain profiles that guarantee an excellent efficiency of heat exchange, by impressing the plane surface of a skelp with one or more ridged rollers. In this way, it is also possible to obtain intersecting grooves.

Starting from this type of grooved skelp, it is possible, then, to make a tube by appropriately performing a longitudinal weld.

It is possible alternatively to consider improving the mechanical characteristics of the tube, at the same time limiting considerably the increase of thickness dictated by the higher operating pressures, by means of the use of alloys that have higher mechanical characteristics.

Amongst the copper alloys (or in any case ones that have high thermal and electrical conductivity) that present characteristics of relatively high strength, alloys are known that can undergo precipitation hardening.

Precipitation-hardened alloys are obtained by means of a specific thermal treatment that envisages: a first step of heating to a temperature such as to cause complete solubilization in the base metal of the constituent that renders the alloy hardenable (formation of a solid solution); a second step of more or less rapid cooling (quenching) in which the solid solution is brought into conditions of oversaturation and hence thermodynamically metastable conditions; and a final step of ageing, in which there is the segregation of a precipitate, accompanied by a distortion of the basic lattice, resulting in a considerable increase in the hardness. Amongst alloys that present this type of behaviour are the Cu-Fe-P and Cu-Fe-Ni-P systems, upon which, by means of appropriate thermal treatment, mechanical properties can be bestowed that are markedly better than those of pure copper, of which they maintain, however, the electrical and thermal conductivity substantially unvaried.

The mechanical properties of the precipitation-hardened alloys of the Cu-Fe-P and Cu-Fe-Ni-P systems depend upon the specific thermal treatment that they undergo during their preparation and that is aimed at optimizing the development of the strength and the electrical and thermal conductivity. Their hardness and strength depend both upon the step of quenching and upon the treatment of ageing and precipitation. Furthermore, the electrical conductivity reaches a maximum at the end of the precipitation treatment.

The use of said alloys, instead of Cu-DHP alloys, for making tubes by means of longitudinal welding, for example starting from a grooved skelp, appears, however, problematical. On account of the high development of localized heat that is generally associated to traditionally used welding techniques, there would in fact be obtained a worsening of the thermomechanical characteristics of the alloy in an area corresponding to the weld bead, where a new solubilization of the precipitate would occur. It is on the other hand evident that, if an attempt were made to form tubes directly with said alloys, for example via extrusion, a series of practical problems would be encountered, such as that of obtaining internal grooves with an intersecting profile, or else that of forgoing said grooves, with consequent reduction in the heat-exchange coefficient.

It is consequently an aim of the present invention to provide a method for the production of tubes for heat exchangers that are suited to working at the high pressures dictated by the use of new thermal fluids, that does not present the drawbacks described above and, in particular, that is relatively simple and inexpensive to implement, that makes use of alloys that are already available, and that guarantees obtaining tubes that are relatively thin but with good mechanical characteristics and have purposely provided internal grooves such as to guarantee in use high heat-exchange coefficients.

According to the present invention, a method for producing tubes for heat exchangers is thus provided, as defined in Claim 1.

In particular, according to the invention, the tubes are produced starting from precipitation-hardened alloys, but exploiting a welding process that guarantees maintenance of the characteristics of strength and heat-exchange efficiency also in the weld bead, such as high-frequency induction welding. Furthermore, according to the method of the present invention, the weld bead that is obtained using said welding method is of dimensions of the same order of magnitude as the possible internal groove of the surface of the tube and, hence, concurs in a homogeneous way to increasing the turbulence and, consequently, the heat-exchange coefficient of the tubes during operation.

In greater detail, the method for producing a tube for heat exchangers according to the present invention comprises the steps of:
- producing an ingot with rectangular cross section (plate) made of an alloy that can undergo precipitation hardening;
- hot-rolling the plate so as to form a blank;
- rapidly cooling the blank, for example by spraying water within a purposely designed cooling tunnel;
- cold-rolling the blank until a skelp is obtained;
- forming the tube starting from the skelp to pass from the plane geometry to the cylindrical geometry of the tube;
- welding the tube; and
- calibrating the diameter of the tube ("sizing").

The welding operation, as mentioned previously, is performed according to a process of high-frequency induction welding, operating at a frequency of the generator of 600 kHz, with a welding rate of approximately between 50 m/min and 200 m/min and an absorbed power of approximately between 20 kW and 60 kW, maintaining a tightening force between the tightening rollers of the welding device (which perform the gradual passage from the plane shape of the skelp to the cylindrical shape of the tube) of approximately between 50 kg and 300 kg. In addition, during the welding step, the gradual passage from the plane geometry to the cylindrical geometry is performed, taking care to maintain an angle of the so-called "welding vee", as will be specified better hereinafter, of approximately between 2° and 20°.

After cold rolling and prior to forming of the tube, it is envisaged to subject the skelp to a thermal treatment of annealing and ageing.

It is moreover possible to envisage, immediately prior to formation and welding of the tube, an operation of embossing to form grooves that involves what will in use be the internal surface of the tube.

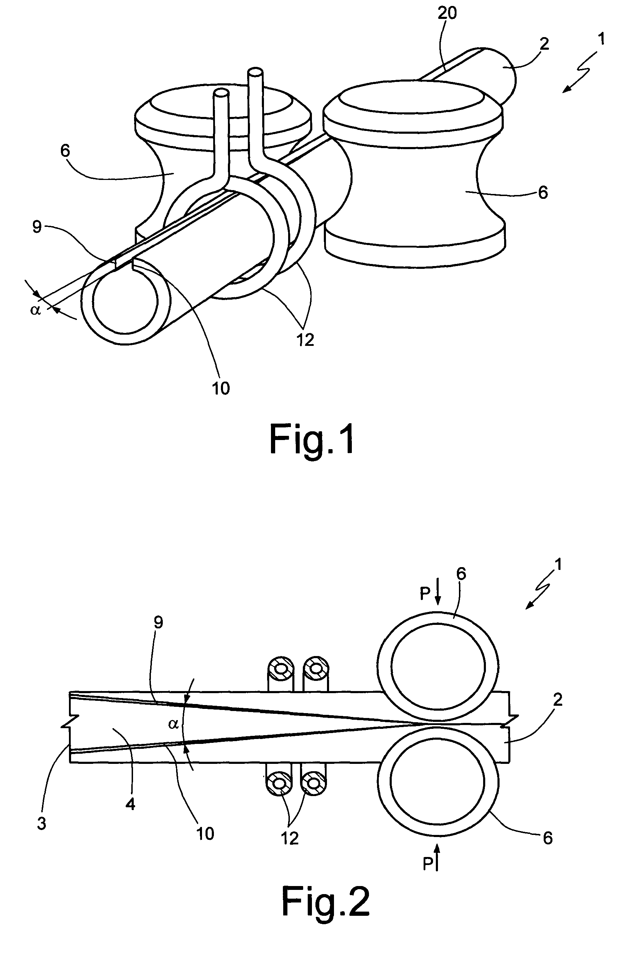

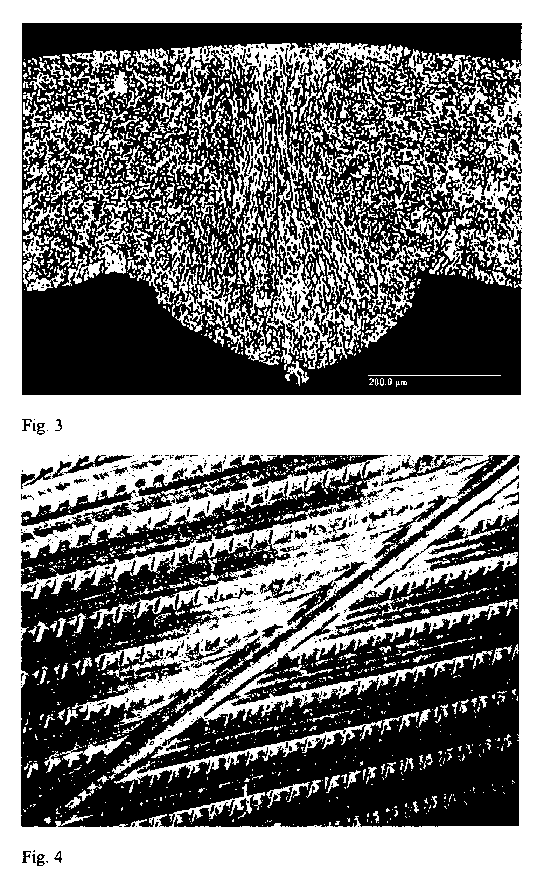

A preferred embodiment of the invention will now be described, purely by way of non-limiting example, with reference to the figures of the attached plate of drawings, wherein:
~ Figure 1 is a schematic three-quarters front perspective view of equipment, of a known type, which carries out an operation of high-frequency induction welding of a tube formed starting from a plane skelp;
~ Figure 2 illustrates the same operation as that of Figure 1 but in a top plan view;
~ Figure 3 is an optical micrograph of a portion of cross section of an ACR tube made according to the method of the invention, taken in an area corresponding to the weld bead; and
~ Figure 4 is an optical micrograph of the internal lateral surface of the same welded tube of Figure 3, provided with internal grooves to increase heat exchange.

The method for producing a tube for heat exchangers according to the present invention envisages first of all producing an ingot with rectangular cross section (plate) starting from an alloy that can undergo precipitation hardening and, in a preferred embodiment thereof, starting from an alloy chosen within the Cu-Fe-P and Cu-Fe-Ni-P systems.

Table 1 gives the data regarding the weight-percentage composition of the Cu-Fe-P and Cu-Fe-Ni-P alloys used for the high-frequency induction welding test of a tube in the preferred embodiment of the present invention.

**Table 1 - Weight-percentage composition of the alloys used for high-frequency induction welding of an ACR tube**

| Alloy | Fe wt% | P wt% | Ni wt% | Cu wt% |
|---|---|---|---|---|
| Cu-Fe-P** | 0.101 | 0.0348 | - | Remainder |
| Cu-Fe-P-Ni** | 0.0560 | 0.0362 | 0.0613 | Remainder |

Table 2 gives, instead, some of the mechanical and electrical characteristics of the alloys used for the production of welded tubes for heat exchangers according to the invention, as compared to the same characteristics of an alloy used in the case of known methods.

**Table 2 - Comparison of mechanical and electrical characteristics of alloys that can be used for the production of welded tubes for heat exchangers (* Annealed ; ** Aged +¼ hardened)**

| Alloy | IACS % | Rm (MPa) | Rp_{0.2} (MPa) | A % | HV |
|---|---|---|---|---|---|
| Cu DHP* | 85 | 220 | 50 | 48 | 50 |
| Cu-Fe-P** | 85 | 340 | 190 | 20 | 100 |
| Cu-Fe-P-Ni** | 85 | 348 | 185 | 18 | 80 |

According to the method of the present invention, in a first step an ingot with rectangular cross section (plate) is prepared according to known techniques, which are not consequently described herein, for reasons of simplicity.

Next, the plate is subjected to hot rolling, after which the resulting blank is rapidly cooled, preferably by spraying water, inside a purposely designed cooling tunnel. Also these operations, performed according to widely known techniques, are not described in detail for reasons of simplicity.

In a subsequent step, the blank is further cold-rolled until a skelp with a thickness of between 0.2 and 1.0 mm is obtained.

The skelp is subsequently subjected to a thermal treatment of annealing and ageing at a temperature of between 350°C and 600°C. In this step of the treatment, the segregation of the precipitate occurs, which leads to a condition of equilibrium of the system. Said segregation takes place through intermediate metastable stages, so that initially formed in the solid solution are areas richer in atoms of the solute, which tend to move into positions of greater symmetry, inserting into the interstices of the basic lattice. This causes a reticular distortion, which is accompanied by onset of particular mechanical characteristics, and in particular by a sensible increase in the hardness.

Once the thermal treatment is completed, if the process is aimed at the production of grooved tubes, the embossing step is carried out, for which purposely designed ridged rollers are used, which are impressed on the face of the skelp that is to become the internal surface of the tube.

The next step is that of forming of the tube to pass from the plane geometry of the skelp to the cylindrical geometry of the tube itself. This is followed by the welding step, which, according to the main aspect of the invention, is performed via high-frequency induction welding.

With reference to Figures 1 and 2, which illustrate equipment 1 as a whole known for forming tubes 2 starting from a plane skelp 3, said skelp, which comes from rolling of the blank referred to above and bears, on a top face 4 thereof (Figure 2) that is to become the internal surface of the tube 2, grooves 5 (clearly visible in the micrograph of Figure 4), is made to pass between a pair of rollers 6, which, in a known way, bend progressively towards one another the respective opposite longitudinal edges 9, 10 of the skelp 3, until they mate head-on, pressing them against one another with a force P (transverse to the axis of the tube being formed, as indicated by the arrows in Figure 2) of a pre-set and controlled amount. Simultaneously with said step of plastic deformation of the skelp 3, which is performed preferably keeping the rollers 6 (which are, however, mounted idle and are consequently free to rotate about their own axes) stationary and causing, instead, the skelp 3 to advance longitudinally towards said rollers, in the direction indicated by the arrow (Figure 1), at a controlled rate, an extremely rapid and localized heating thereof is performed, in the case in point via a (known) induction coil 12, set, in the example illustrated, immediately upstream (with respect to the direction of advance of the skelp 3) of the rollers 6.

In this way, a welding of the edges 9, 10 of the bent skelp 3 which have been brought up adjacent to one another is obtained by applying thereon a combination of heat and mechanical pressure. An effective welding uses an optimal amount of heat, which generally brings the material just below its melting point, and the substantially simultaneous application of pressure on the circumference of the section, which joins the heated edges together, with a sort of upsetting. The heat generated is the result of the resistance of the material to the flow of electric current. However, according to the invention, the heat is such as to induce not melting, but only softening, of the material, which hence preserves its microstructure intact, with the precipitates distributed in a homogeneous way.

The welding current is transmitted to the material by means of the high-frequency induction coil 12, which is not directly in contact with the tube 2 being formed. The electric current, in fact, is induced within the material by means of the magnetic fields that surround the tube.

In a preferred embodiment of the method according to the present invention, high-frequency induction welding is carried out using a frequency of the generator (not illustrated and connected to which, in a known way, is the induction coil 12) of approximately 600 kHz, operating with a welding rate (equal to the rate of longitudinal advance of the skelp 3 towards the rollers 6) of approximately between 50 m/min and 200 m/min, and so as to obtain an absorbed power of approximately between 20 kW and 60 kW; simultaneously, by means of the tightening rollers 6, a transverse force P is applied of approximately between 50 kg and 300 kg.

From the operating standpoint, it has proven moreover important to keep under control, and select appropriately, the angle α defined by the so-called "welding vee", i.e., the angle defined by the two facing edges 9, 10 of the skelp 3 (which is by now almost completely bent) when, advancing, they come to occupy a position corresponding to the high-frequency induction coil 12 (Figure 2).

From a standpoint purely linked to the welding efficiency, the "welding vee" should be physically as short as possible in order to reduce the conduction losses and to direct the majority of the induced current to flow in the "welding vee" itself. The length of the "welding vee" is determined by the dimensions and by the position of the tightening rollers, and the thickness itself of the tube can affect the value thereof. If the "welding vee" is too short, the distribution of temperature along the edges of the skelp may be irregular, thus giving rise to an incomplete weld, or else may cause overheating of the edges being joined together and the possible impairment of the properties of the material.

Consequently, in the case where the other parameters are the same, the angle α formed by the two edges 9, 10 of the skelp 3 (referred to also as angle of approach or angle of the "welding vee") affects the effectiveness of the weld. Small angles require less power, because the effect of proximity, which concentrates greater power on the surface of the material, is greater. The use of an angle of approach that is too small is, however, disadvantageous because it could cause undesirable formation of an electric arc. A very small angle can moreover accentuate the possible mechanical instability in the skelp.

According to the preferred embodiment of the method of the present invention, the angle corresponding to the "welding vee", i.e., the angle α, indicated in Figures 1 and 2, must remain of approximately between 2° and 20°.

Operating in the way described, the weld bead, designated by the reference number 20 in the micrographs of Figures 3 and 4 (as well as in Figure 1), which is obtained as a result of upsetting of the partially fluidified material of the edges 9, 10 performed by the pressure applied by the force P exerted by the rollers 6, has a height that is of the same order of magnitude as the height normally used for the grooves 5 and, as illustrated in Figure 4, will generally be oriented in a direction transverse to the grooves 5 themselves. Consequently, not only does its presence not produce any drawback, but rather it further increases in use the effect of turbulence of the grooves 5 themselves.

Obviously, the bead 20 will protrude in a radial direction with respect to the tube 2, at the end of the welding process, both towards the inside of the tube 2 itself (as illustrated in Figure 3), having the favourable effect mentioned above, and towards the outside of the tube 2, where, for purely aesthetic and practical reasons, it is removed, to obtain a tube 2 that is smooth on the outside.

The tubes obtained with the method according to the present invention meet the Japanese standards JIS H regarding tubes for industrial applications made of non-ferrous material. More precisely, they meet the JIS H 3320 standards, which refer in particular to welded pipes made of copper and copper alloys. In fact, there do not exist either European or American standards which refer specifically to welded copper tubes. In particular, in addition to determining the mechanical characteristics, in order to verify the strength of the weld obtained according to the invention there is envisaged the pneumatic test, the hydrostatic test, the flaring test with a cone having an angle of 60°, and the flattening test, by which the tube obtained is squeezed in the transverse direction.

The tubes obtained according to the method of the invention, using both of the alloys of Table 1, have all proven able to pass the test required by the standards referred to above, and it has been possible to bend said tubes in the form of a U (to obtain nests of tubes for heat exchangers) without any drawbacks or failures.

## Claims

1. A method for the production of tubes, in particular tubes (2) for heat exchangers, starting from a plane skelp (3) made of a metal alloy, in which respective opposite longitudinal edges (9, 10) of the skelp are bent towards one another until they are brought into mutual contact and butt welded against one another; said method being **characterized in that**:
i) the metal alloy with which the skelp (3) is obtained is chosen in the group of alloys that can undergo precipitation hardening; and
ii) the welding step is performed by a process of high-frequency induction welding.

2. The method according to Claim 1, **characterized in that** it comprises the steps of:
a) producing an ingot with rectangular cross section (plate);
b) hot-rolling said ingot so as to form a blank;
c) rapidly cooling said blank;
d) cold-rolling said blank until a skelp (3) is obtained; and
forming the tube (2) starting from said skelp (3) to pass from the plane geometry of said skelp to the cylindrical geometry of the tube and welding said tube,
said ingot being formed starting from said alloy that can undergo precipitation hardening and said tube being welded by means of said process of high-frequency induction welding.

3. The method according to Claim 2, **characterized in that** said step of rapid cooling of the blank is performed by spraying water within a purposely designed cooling tunnel.

4. The method according to Claim 2 or Claim 3, **characterized in that** immediately after step d) said skelp (3) is subjected to a thermal treatment of annealing and ageing at a temperature of between 350°C and 600°C.

5. The method according to any one of Claims 2 to 4, **characterized in that** immediately prior to step e) there is envisaged the step of subjecting said skelp (3) to an operation of embossing.

6. The method according to any one of the preceding claims, **characterized in that** said alloy is an alloy belonging to the systems Cu-Fe-P and/or Cu-Fe-Ni-P.

7. The method according to any one of the preceding claims, **characterized in that** the alloy used has a composition expressed in weight percentages of: Fe 0.101 wt%; P 0.0348 wt%, the remainder Cu; or else: Fe 0.056 wt%, P 0.0362 wt%, Ni 0.0613 wt%, the remainder Cu.

8. The method according to any one of the preceding claims, **characterized in that** said blank is rolled until it has a thickness of approximately between 0.2 and 1.0 mm.

9. The method according to any one of the preceding claims, **characterized in that** said skelp (3) is subjected to a thermal treatment of annealing and ageing at a temperature of approximately between 350°C and 600°C.

10. The method according to any one of the preceding claims, **characterized in that** said tube (2) is welded by high-frequency induction welding using a generator frequency of 600 kHz.

11. The method according to Claim 10, **characterized in that** said high-frequency welding is carried out by operating at a welding rate of approximately between 50 m/min and 200 m/min.

12. The method according to Claim 10 or Claim 11, **characterized in that** said tube is welded by high-frequency induction welding so as to have an absorbed power of approximately between 20 kW and 60 kW.

13. The method according to any one of the preceding Claims 10 to 12, **characterized in that** said tube is welded by high-frequency induction welding using a tightening force on said edges (9, 10), applied via said tightening rollers (6) of approximately between 50 kg and 300 kg.

14. The method according to any one of the preceding claims, **characterized in that** said tube is welded by high-frequency induction welding operating with an angle of the "welding vee" of approximately between 2° and 20°.
